# EUROPEAN PATENT APPLICATION

(11) **EP 4 757 300 A1**
(43) Date of publication of application: **10.06.2026**
(21) Application number: 24218273.1
(22) Date of filing: 09.12.2024
(51) Int. Cl.: H04M 3/42, H04M 3/436

(54) **PREVENTING CALL SPOOFING**

(71) Applicant: Vodafone GmbH, 40549 Düsseldorf (DE)
(72) Inventor: DURDUBAS, Adem, 45277 Essen (DE); KAUMANNS, Ralf, 51469 Bergisch-Gladbach (DE)
(74) Representative: Weisbrodt, Bernd

(57) **Abstract**

The present invention relates to solutions preventing Call Spoofing, especially Caller ID Spoofing, for calls to a recipient device of at least one recipient party which is registered for mobile telecommunication services of a mobile network of a mobile network provider. Provided according to the present invention is a method to be executed on site of at least one network entity (CPP) of a mobile network of a mobile network provider to prevent Caller ID spoofing for calls from a calling party to a device of at least one recipient party which is registered, advantageously is a subscriber of the mobile network provider, for mobile telecommunication services of the mobile network of the mobile network provider, wherein a call from a calling party to a recipient device is only originated respectively routed via the mobile network of the mobile network provider, when the calling party and the expected call to the recipient party are pre-registered with the network entity (CPP) of the mobile network of the mobile network provider before initiating the call by the calling party. Checking a timestamp, a parameter with regard to a time the call will be valid and the phone number of the recipient party on side of the network entity (CPP) of the mobile network of the mobile network provider for verification of the legitimation of the call.

## Description

The present invention relates to solutions preventing Call Spoofing, especially Caller ID spoofing, for calls to a recipient device of at least one recipient party which recipient party is registered for mobile telecommunication services of a mobile network of a mobile network provider, especially comprising a method, a to be executed on site of at least one network entity of a mobile network of a mobile network provider, a network entity of a mobile network of a mobile network provider used or useable to prevent Call Spoofing, especially Caller ID spoofing, for calls from a calling party to a device (recipient device) of at least one recipient party, and a mobile network of a mobile network provider comprising a network entity according to the present invention used or useable to prevent Call Spoofing, especially Caller ID spoofing, for calls from a calling party to a device (recipient device) of at least one recipient party according to a method according to the present invention.

A mobile network provider (also referred to as mobile network operator) of a mobile network provides mobile telecommunication services to its subscribers, such as voice and/or data services for mobile devices or phones. The mobile network of the mobile network provider comprises entities of the core network of the mobile network and network entities supporting the core network respectively the entities of the core network. A subscriber to a telecommunication network is usually identified by its identifier in the network, especially its phone number or IMSI (International Mobile Subscriber Identity). During a call the identifier of a calling party - a Caller Identifier or Caller ID - can be presented on a display of a device (phone) of a called recipient party.

Many customers (subscribers) of mobile network providers get calls from unknown numbers (phone numbers). Those calls are sometimes spam calls or scam calls.

Using mobile spoofing techniques such as Caller ID spoofing, a calling party can signal for example a foreign or false phone number, e.g. an MSISDN or PSTN number, on the display of a device of a called recipient party. This makes it possible to misuse calls, for example by presenting a foreign identity, which could allow unauthorized persons to obtain sensitive information from the called recipient party.

Mobile spoofing refers to various methods of manipulating the identity of a mobile phone respectively device or information about its location or number. Typical forms of mobile spoofing include for example:
- Caller ID spoofing
   Caller ID (also Caller Identifier) spoofing involves manipulating the caller ID to appear to be a different number than is actually being used. This can for example be used to disguise identities or hide fraudulent activity.
- SMS spoofing
   SMS spoofing, similar to Caller ID spoofing, involves spoofing the sender number of a text message. This can for example be used for phishing attacks or to disguise messages as coming from a trusted source.
- IMSI catchers
   IMSI catchers, for example as devices, are used to capture International Mobile Subscriber Identity (IMSI) numbers from cell phones. They can for example be used to track the location of a phone or to disrupt the connection.
- GPS spoofing
   GPS spoofing involves manipulating the GPS position of a mobile phone to generate false location information. This can for example be used to provide false data to location services or navigation applications.

Protection against spoofing requires advanced security measures and regular monitoring of the network infrastructure.

Known solutions to prevent Caller ID spoofing only provides network-based caller verification due to an additional display name. As a result, there is still a security gap for customers of a mobile network provider which are subscribed for mobile telecommunication services, such as voice and/or data services, of a mobile network of the mobile network provider, especially as scammers could at least theoretically spoof a phone number and thus creating trust from the customer which could lead to obtaining sensitive data, such as passwords, keys, sensitive private information and/or the like. This is a security gap.

Known solutions to prevent Caller ID spoofing are further less efficient, especially with regard to energy respectively power consumption, especially since such known solutions are so called third-party services which on site of a telecommunication network, especially a mobile network of a mobile network provider require network resources for call signalising and/or call handling for each call from a calling party to a device (recipient device) of a recipient party.

Therefore, an anti-spoofing solution is required, which provides protection against the manipulation of a phone number, especially a company's phone number, and provides customers with the assurance that they will not be called by criminals using a manipulated phone number, especially a manipulated company phone number, for example form a call centre of a company, and which is efficient with regard to network resources for calls from a calling party to a recipient party.

Addressing this problem, the present invention suggests a method to be executed on site of at least one network entity of a mobile network of a mobile network provider to prevent Call Spoofing, especially Caller ID spoofing, for calls from a calling party to a device (recipient device) of at least one recipient party which recipient party is registered, advantageously is a subscriber of the mobile network provider, for mobile telecommunication services, such as voice and/or data services, of the mobile network of the mobile network provider, wherein a call from a calling party to a recipient device is only originated respectively routed via the mobile network of the mobile network provider, when the calling party and the call to the recipient party are registered previously with the network entity of the mobile network of the mobile network provider before initiating the call by the calling party.

The invention is based on the knowledge that with such a service is given respectively provide-able that gives valuable and/or relevant information to accept or reject such calls and that enables the customers of a mobile network provider, especially subscribers of mobile telecommunication services, such as voice and/or data services, of a mobile network of the mobile network provider, to better communicate with calling parties, especially Brands representing the calling parties, for example a call centre of a bank or an insurance company. Thus the subscriber of a mobile network provider as a consumer can have higher confidence to pick up a call from a calling party, especially a legitimate business as a calling party, or reject a call from a potential scammer. Since according to the present invention a call from a calling party to a device (recipient device) of a recipient party is only originated respectively routed via the mobile network of the mobile network provider when the call and the calling party are previously registered with the network entity of the mobile network of the mobile network provider, otherwise necessary network resources of the mobile network of the mobile network provider are reduced respectively minimised, especially for call signalising and/or call handling.

The solution according to the present invention provides advantageously protection against the manipulation of a calling party's phone number, especially a company's phone number, and further provides customers, especially subscribers, with the assurance that they will not be called by criminals using a manipulated phone number, especially a manipulated company phone number.

By implementing the Caller ID anti-spoofing solution according to the present invention, a mobile network provider can advantageously strengthen the trust of its customers and protect itself and external companies that use the Caller ID service, from fraud and/or scam. Calling parties, for example Brands of a bank, insurance company or the like, will value the increased pickup rate and the improved security for its own calls. Thus, there is a huge commercial advantage for a mobile network provider by making the service more valuable, especially in terms of service quality.

According to the present invention the network entity of the mobile network of a mobile network provider, which is used or useable to prevent Caller ID spoofing for calls from a calling party to a device (recipient device) of at least one recipient party which recipient party is registered, advantageously is a subscriber of the mobile network provider, for telecommunication services of the mobile network of the mobile network provider, is implemented within the routing procedures and network entities of the call on site of the mobile network of the mobile network provider. The network entity of the mobile network of a mobile network provider advantageously comprises a part implemented with the core network of the mobile network of the mobile network provider and a part outside of the mobile core network of the mobile network of the mobile network provider. The latter is advantageously used or useable for registering the calling party and/or the call to the recipient party before initiating the call by the calling party. For this the network entity of the mobile network of a mobile network provider used or useable to prevent Caller ID spoofing advantageously provides a Call Protect Portal (CPP), with which a calling party can be registered as a calling party and with which a calling party can register a subsequent call to a recipient party. The part of the network entity of the mobile network of a mobile network provider - hereinafter also referred to as CPP - is advantageously implemented with the core network of the mobile network of the mobile network provider at least by being called or requested by an entity of the core network of the mobile network of the mobile network provider originating respectively routing the call via the mobile network of the mobile network provider.

According to the present invention the previously registering of the calling party with the network entity (CPP) of the mobile network of the mobile network provider advantageously comprises registering and storing at least one phone number (A-number) of the calling party in a list of a database of the network entity (CPP) of the mobile network of the mobile network provider. Advantageously the previously registering of the calling party with the network entity (CPP) of the mobile network of the mobile network provider further comprises registering and storing a Caller ID of the calling party in a list of a database of the network entity (CPP) of the mobile network of the mobile network provider, wherein the Caller ID advantageously comprises at least one of a name, a logo, a key, a photo, a video, at least one information item with regard to the reason or content of the call.

According to the present invention the previously registering of the call, which is done subsequent (subsequent call), from the calling party to the recipient party with the network entity (CPP) of the mobile network of the mobile network provider comprises registering and storing parameters for the subsequent call, comprising at least a or the phone number (A-number) of the calling party, the phone number (B-number) of at least one recipient party respectively of the device (recipient device) of at least one recipient party and advantageously a timestamp and/or a parameter with regard to a time the call will be valid (NotValidBefore parameter) in a list of a database of the network entity (CPP) of the mobile network of the mobile network provider. The list and/or database can be the same list and/or database used for registering a calling party, and/or a separate list and/or database.

According to the present invention the registering and storing of the calling party with the network entity (CPP) of the mobile network of the mobile network provider and/or the registering and storing of the call to the recipient party with the network entity (CPP) of the mobile network of the mobile network provider is advantageously done by the calling party via an Application Programming Interface (API) of the network entity (CPP) of the mobile network of the mobile network provider, advantageously with secure data connections between the Application Programming Interface (API) and the network entity (CPP). The call between the calling party and the recipient party itself can advantageously be done with a Session Initiation Protocol (SIP).

In a preferred embodiment of the present invention the at least one phone number (A-number) of the calling party is stored in a list of a Telephony Application Server (TAS) of the mobile network of the mobile network provider by the network entity (CPP) of the mobile network of the mobile network provider and can advantageously be checked for incoming calls, advantageously when routing a call. A Telephony Application Server (TAS) of the mobile network of the mobile network provider advantageously comprises a whitelist of numbers or number ranges, according to the present invention A-numbers or A-number ranges. If a number, according to the present invention a number of a calling party (A-number), is within the whitelist of a Telephony Application Server (TAS) of the mobile network of the mobile network provider, that means is valid, then the network entity (CPP) of the mobile network of the mobile network provider is advantageously contacted from the Telephony Application Server (TAS) via the core network of the mobile network of the mobile network provider via another Application Programming Interface (API) of the network entity (CPP) of the mobile network of the mobile network provider. The network entity (CPP) of the mobile network of the mobile network provider then checks configurations and/or conditions with regard to the registering of the calling party and the call from the calling party to a recipient party, advantageously by using the A-number of the calling party with the list or lists of the database or databases, and returns the result to the Telephony Application Server (TAS) via the mobile core network of the mobile network of the mobile network provider. The result advantageously might be a parameter with regard to a) "Block current call" representing missing registration with block configuration, b) "Continue call without Caller ID" representing missing registration with continue configuration, or c) "Continue call with Caller ID" representing successful preventing Caller ID spoofing according to the present invention. Then the Telephony Application Server (TAS) routes the call from the calling party to the recipient party, based on the result respectively parameter of the network entity (CPP) of the mobile network of the mobile network provider (which means the call is not routed according to parameter a), or the call is routed without Caller ID according to parameter b), or the call is routed with the Caller ID according to parameter c)). Thus according to the present invention the checking for incoming calls is advantageously done without any additional calls or requests to other services and/or functions outside of the core network of the mobile network of the mobile network provider.

Advantageously the checking for incoming calls according to the present invention further comprises checking at least one of a timestamp, the parameter with regard to a time the call will be valid (NotValidBefore parameter) and the phone number (B-number) of the recipient party on site of the network entity (CPP) of the mobile network of the mobile network provider, advantageously for further verification of the legitimation of the call.

According to a further embodiment of the present invention the parameters for the subsequent call are stored within the network entity (CPP) of the mobile network of the mobile network provider with a defined validity, advantageously within a range of a time window or time interval of at least one second and a maximum of 24 hours, preferred within a range of 3 seconds up to 15 minutes. The shorter the time window or time interval, the more secure is the call.

According to the present invention it is advantageously provided that the calling party initiates a call to the recipient party using the phone number (A-number) of the calling party and the phone number (B-number) of the of at least one recipient party respectively of the device (recipient device) of at least one recipient party.

In a further embodiment of the present invention the calling party is provided with information or an information item with regard to a time the call will be valid, based on the parameter with regard to a time the call will be valid (NotValidBefore parameter) by the network entity (CPP) of the mobile network of the mobile network provider. The information item advantageously is a logo to be displayed on site of the calling party.

A preferred embodiment of the present invention is characterized in that the call from the phone number (A-number) of the calling party is recognized in the mobile network of the mobile network provider by using the list (whitelist) stored in a Telephony Application Server (TAS) of the mobile network of the mobile network provider. Advantageously the Telephony Application Server (TAS) sends a request to the network entity (CPP) of the mobile network of the mobile network provider to verify the call from the phone number (A-number) of the calling party, wherein the request advantageously comprises if and how the call should be routed. Advantageously the network entity (CPP) of the mobile network of the mobile network provider receives the request and verifies if the calling party respectively the at least one phone number (A-number) of the calling party is stored in the list of the database of the network entity (CPP) of the mobile network of the mobile network provider, and if this is the case verifies whether the call has taken place for the phone number (B-number) of the at least one recipient party within the defined time window or time interval, and if that is the case the call is put through to the recipient party respectively recipient device and is otherwise blocked and not put through to the recipient party respectively recipient device. Advantageously it is provided according to the present invention, that in case the call has taken place for the phone number (B-number) of the at least one recipient party within the defined time window or time interval the call is approved by the call authorization service of the mobile network of the mobile network provider and enriched with the Caller ID of the calling party, which is advantageously provided to a Telephony Application Server (TAS) respectively the Telephony Application Servers (TASs) of the mobile network of the mobile network provider by the network entity (CPP) of the mobile network of the mobile network provider.

According to the present invention it is provided, that the call from a calling party to a recipient device is originated respectively routed via the mobile network of the mobile network provider by using Voice over LTE (VoLTE).

Addressing this problem, the present invention further suggests a network entity (CPP) of a mobile network of a mobile network provider used or useable to prevent Caller ID spoofing for calls from a calling party to a device (recipient device) of at least one recipient party which (recipient party) is registered, advantageously is a subscriber of the mobile network provider, for mobile telecommunication services, such as voice and/or data services, of the mobile network of the mobile network provider, which network entity (CPP) is set up, designed and/or adapted according to the method according to the present invention.

According to the present invention a network entity (CPP) of a mobile network of a mobile network provider used or useable to prevent Call Spoofing, especially Caller ID spoofing, for calls from a calling party to a device (recipient device) of at least one recipient party which (recipient party) is registered, advantageously is a subscriber of the mobile network provider, for mobile telecommunication services of the mobile network of the mobile network provider, is set up, designed and/or adapted to originate respectively route a call from a calling party to a recipient device via the mobile network of the mobile network provider only, when the calling party and the call to the recipient party are registered previously with the network entity (CPP) of the mobile network of the mobile network provider before initiating the call by the calling party.

Advantageously the previously registering of the calling party with the network entity (CPP) of the mobile network of the mobile network provider comprises registering and storing at least one phone number (A-number) of the calling party in a list of a database of the network entity (CPP) of the mobile network of the mobile network provider. Advantageously the previously registering of the calling party with the network entity (CPP) of the mobile network of the mobile network provider further comprises registering and storing a Caller ID of the calling party in a list of a database of the network entity (CPP) of the mobile network of the mobile network provider, wherein the Caller ID advantageously comprises at least one of a name, a logo, a key, a photo, a video, at least one information item with regard to the reason or content of the call.

The network entity (CPP) is advantageously set up, designed and/or adapted to previously registering of the subsequent call from the calling party to the recipient party with the network entity (CPP) of the mobile network of the mobile network provider, which preferably comprises registering and storing parameters for the subsequent call, wherein the parameters comprising at least a/the phone number (A-number) of the calling party, the phone number (B-number) of at least one recipient party respectively of the device (recipient device) of at least one recipient party and advantageously a timestamp and/or a parameter with regard to a time the call will be valid (NotValidBefore parameter), in a list of a database of the network entity (CPP) of the mobile network of the mobile network provider.

According to the present invention the registering and storing of the calling party with the network entity (CPP) of the mobile network of the mobile network provider and/or the registering and storing of the call to the recipient party with the network entity (CPP) of the mobile network of the mobile network provider is advantageously done by the calling party via an Application Programming Interface (API) of the network entity (CPP) of the mobile network of the mobile network provider, advantageously with secure data connections between the Application Programming Interface (API) and the network entity (CPP).

In a preferred embodiment of the present invention the network entity (CPP) is advantageously set up, designed and/or adapted to store the at least one phone number (A-number) of the calling party in a list of a Telephony Application Server (TAS) of the mobile network of the mobile network provider by the network entity (CPP) of the mobile network of the mobile network provider, especially in such a way that it can advantageously check for incoming calls, advantageously when routing a call. A Telephony Application Server (TAS) of the mobile network of the mobile network provider advantageously comprises a whitelist of numbers or number ranges, according to the present invention A-numbers or A-number ranges. If a number, according to the present invention a number of a calling party (A-number), is within the whitelist of a Telephony Application Server (TAS) of the mobile network of the mobile network provider, that means is valid, then the network entity (CPP) of the mobile network of the mobile network provider is advantageously contacted from the Telephony Application Server (TAS) via the core network of the mobile network of the mobile network provider via another Application Programming Interface (API) of the network entity (CPP) of the mobile network of the mobile network provider. The network entity (CPP) of the mobile network of the mobile network provider is advantageously set up, designed and/or adapted to react on the contact of a Telephony Application Server (TAS) and then checks configurations and/or conditions with regard to the registering of the calling party and the call from the calling party to a recipient party, advantageously by using the A-number of the calling party with the list or lists of the database or databases of the network entity (CPP), and returns the result to the Telephony Application Server (TAS) via the core network of the mobile network of the mobile network provider. The result advantageously might be a parameter with regard to a) "Block current call" representing missing registration with block configuration, b) "Continue call without Caller ID" representing missing registration with continue configuration, and/or c) "Continue call with Caller ID" representing successful preventing Caller ID spoofing according to the present invention. Then the Telephony Application Server (TAS) routes the call from the calling party to the recipient party, based on the result respectively parameter of the network entity (CPP) of the mobile network of the mobile network provider (which means the call is not routed according to parameter a), or the call is routed without Caller ID according to parameter b), or the call is routed with the Caller ID according to parameter c)). Thus according to the present invention the checking for incoming calls is advantageously done without any additional calls or requests to other services and/or functions outside of the core network of the mobile network of the mobile network provider.

The checking for incoming calls on site of the network entity (CPP) of the mobile network of the mobile network provider advantageously further comprises checking at least one of a timestamp, the parameter with regard to a time the call will be valid (NotValidBefore parameter) and the phone number (B-number) of the recipient party, advantageously for further verification of the legitimation of the call.

Advantageously the parameters for the subsequent call are stored within the network entity (CPP) of the mobile network of the mobile network provider with a defined validity, advantageously within a range of a time window or time interval of at least one second and a maximum of 24 hours, preferred within a range of 3 seconds up to 15 minutes. As already mentioned, the shorter the time window or time interval, the more secure is the call.

According to the present invention the network entity (CPP) is set up, designed and/or adapted to provide the calling party with information with regard to a time the call will be valid, based on the parameter with regard to a time the call will be valid (NotValidBefore parameter) by the network entity (CPP).

According to the present invention the network entity (CPP) is advantageously set up or adapted to receive a request from a Telephony Application Server (TAS) of the mobile network of the mobile network provider to verify the call from the phone number (A-number) of the calling party, wherein the request advantageously comprises if and how the call should be routed. Advantageously the network entity (CPP) of the mobile network of the mobile network provider is set up, designed and/or adapted to receive a request form a Telephony Application Server (TAS) of the mobile network of the mobile network provider and to verify if the calling party respectively the at least one phone number (A-number) of the calling party is stored in a list of a database of the network entity (CPP) of the mobile network of the mobile network provider, and if this is the case to verify whether the call has taken place for the phone number (B-number) of the at least one recipient party within the defined time window or time interval, and if that is the case to put through the call to the recipient party respectively recipient device and to otherwise block and not put through the call to the recipient party respectively recipient device. According to the present invention it is further provided, that in case the call has taken place for the phone number (B-number) of the at least one recipient party within the defined time window or time interval the call is approved by the call authorization service of the mobile network of the mobile network provider and enriched with the Caller ID of the calling party, which is advantageously provided to a Telephony Application Server (TAS) respectively the Telephony Application Servers (TASs) of the mobile network of the mobile network provider by the network entity (CPP).

A further embodiment of the present invention is a mobile network of a mobile network provider comprising a network entity (CPP) according to the present invention used or useable to prevent Caller ID spoofing for calls from a calling party to a device (recipient device) of at least one recipient party, advantageously according to a method according to the present invention.

According to the present invention with the mobile network of a mobile network provider it is advantageously provided, that the call from a calling party to a recipient device is originated respectively originate-able respectively routed respectively route-able via the mobile network of the mobile network provider by Voice over LTE (VoLTE).

A preferred embodiment the present invention according to a further solution to prevent Call Spoofing, especially Caller ID spoofing, for calls according to the present invention, advantageously comprising the following steps respectively network entities set up, designed and/or adapted to these:
1. Registering of the calling party before the calling party can start using the solution for preventing Caller ID spoofing according to the present invention. This is advantageously one-off manual step during which their Caller ID, at least comprising one of a logo, a name and a key, is registered to be used in Call Authorization Service of the network entity CPP (Call Protect Platform). At this stage the calling party needs to be vetted.
2. Login of the calling party, especially agents of a call centre of the calling party, for example with their SIP Phones to a Call Centre SIP Server of the call centre. The calling party is then ready to make and receive calls.
3. Preparing a call respectively calls from agents as a calling party to a recipient party or parties, advantageously via the Call Centre management system, i.e. Genesys OCS or equivalent, of the call centre, wherein the recipient parties are customers of the mobile network provider and are subscribed for telecommunication services, such as voice and/or data services, in the mobile network provided by the mobile network provider respectively mobile network operator, especially based on a business demand. The preparing of calls advantageously comprises registering the B-number of a recipient party, the date and time respectively a time window or time interval for the call the call reason and/or the like.
4. Registering a call from the calling party (A-Number) to a recipient party (B-Number) in the network entity CPP, advantageously via an API, presently called Call Protect Platform Call Registration API. The registration of the call is advantageously valid for a specific time, for example 5 minutes.
5. Initiating a call from the calling party (for example an agent of the call centre) to the recipient party (B Number).
6. Receiving the call in the Voice Core network of the mobile network of the mobile network provider.
7. Calling NaaP (Network as a Platform) with the TAS, advantageously with a NaaP Call Notification API.
8. Invoking the network entity CPP via NaaP Call Notification API, wherein the A-number of the calling party is advantageously detected to use Call Authorization Service of the mobile network of the mobile network provider.
9. Verifying that the parameters of the preregistered call (A number, B number and timestamp) match an entry in the database (call registry) of the network entity CPP via the Call Authentication Service of the mobile network of the mobile network provider.
10. Approving the call and providing valid Display Name, especially the Caller ID at least comprising one of a logo, a name and a key, via the Call Authorization Service of the mobile network of the mobile network provider when the parameters of the preregistered call (A number, B number and timestamp) match.
11. Replacing Display Name, especially the Caller ID, by the TAS.
12. Continuing the call respectively call procedures.

Further details, features and/or advantages of the present invention are explained in more detail below with reference to the embodiments of the present invention shown in the figures of the drawings. Therein:
Fig. 1 shows a principle illustration of a solution to prevent Caller ID spoofing for calls according to the present invention; and
Fig. 2 shows a further illustration of a solution to prevent Caller ID spoofing for calls according to the present invention.

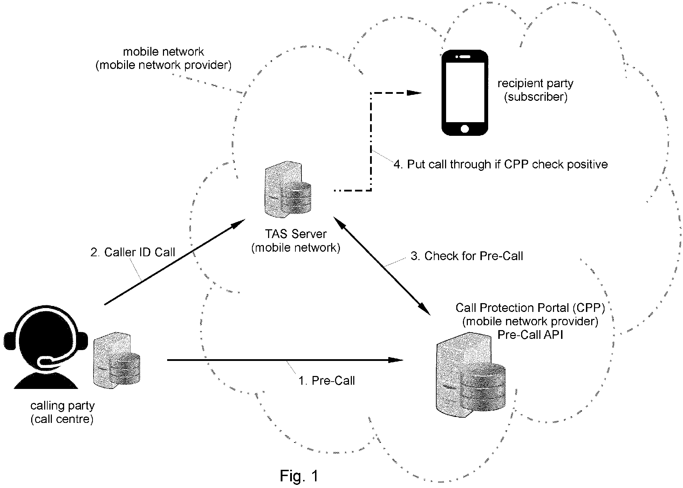

Fig. 1 shows a principle illustration of the solution to prevent Call Spoofing, especially Caller ID spoofing, for calls according to the present invention, with the calling party being an agent of a call centre and the recipient party to be called being a subscriber for mobile telecommunication services, such as voice and/or data services, in a mobile network provided by a mobile network provider respectively mobile network operator. The mobile network and its entities are represented in Fig. 1 by a cloud. According to the present invention at least one network entity of the mobile network provides a Call Protect Portal, CPP.

The prerequisite for using the anti-spoofing solution according to the present invention is that the calling party, especially a company respectively a call centre of a company, must register its "A-number", that is the number of the calling party initiating the call to the recipient party, in respectively with the network entity CPP and activate the anti-spoofing feature for this A-number. As a result, the A-number is stored in the TAS servers of the mobile network and can be checked for incoming calls. Once the A-number is stored in the network entity CPP and the TAS servers, the calling party can go through the anti-spoofing process according to the present invention for its calls. When using the anti-spoofing feature according to the present invention, each call from the A-number to a B-number of a recipient party must now be pre-registered via an API of the network entity CPP with secured data connections between the API and the CPP. If the call is not pre-registered and thus authorized, an actual call from the calling party with the A number to the recipient party with the B-number will not be routed through the mobile network.

After registering the calling party with the network entity (CPP) of the mobile network of the mobile network provider a call from the calling party to a recipient party has to be registered with the network entity (CPP) of the mobile network of the mobile network provider before initiating the call by the calling party.

The first step (compare for example Fig. 1: 1. Pre-Call) is to pre-register the actual call, which is a subsequent call, via the so-called pre-call. This pre-call is initiated by the calling party, for example a call centre of a company that has booked the anti-spoofing feature. The pre-call acts as a kind of "pre-registration" of the subsequent call and advantageously contains important parameters such as the "A-number" (number of the calling party), the "B-number" (number of the called recipient party) and a timestamp. These parameters are transmitted from the pre-call to the network entity CPP, advantageously via a so-called pre-call API, and stored there with a defined validity, for example of e.g. 5 minutes.

In the second step (compare for example Fig. 1: 2. Caller ID Call), the calling party (A number) initiates the actual call to the called recipient party (B number). This call from the A number is recognized in the mobile network using a list (whitelist) stored in the TAS server. In order to check this call advantageously a request is sent from the TAS server to the network entity CPP, asking if and how the call should be routed.

The network entity CPP now in the third step (compare for example Fig. 1: 3. Check for Pre-Call) checks if the anti-spoofing feature according to the present invention is activated for this A-number of the calling party. If this is the case, the network entity CPP checks whether a pre-call, i.e. a pre-registration of this call, has taken place for this B-number in the defined time window. If all parameters are validated successfully, the checked call is put through to the customer of the mobile network provider, which is the recipient party.

In the fourth step (compare for example Fig. 1: 4. Put call through if CPP check was positive), the call is put through to the B-Number of the recipient party, which is a subscriber of the mobile network provider. If the check in the network entity CPP is negative, i.e. the call (A-number and B-number) does not match the parameters of the registered pre-call and the defined time window, the call is blocked and not put through to the B-number of the recipient party. According to an alternative variant of the present invention, the call can be put through to the B-number of the recipient party in case of a negative check, but it is then not enriched with the Caller ID of the calling party but advantageously with a notice/warning notice, which then can be displayed on the display of the recipient device. The notice can advantageously be a logo representing the notice/warning notice.

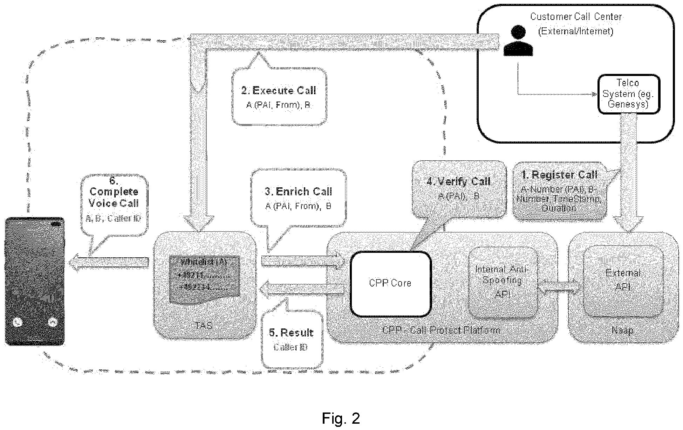

Fig. 2 shows a further illustration of a solution to prevent Call Spoofing, especially Caller ID spoofing, for calls according to the present invention, with the calling party being a call centre and the recipient party to be called being a subscriber for mobile telecommunication services, such as voice and/or data services, in a mobile network provided by a mobile network provider respectively mobile network operator.

The network entity of the mobile network of a mobile network provider advantageously comprises a part implemented with the core network of the mobile network of the mobile network provider (in Fig. 2 symbolized by the dashed line) and a part outside of the mobile core network of the mobile network of the mobile network provider (in Fig. 2 symbolized by the CPP overlapping the part implemented with the core network of the mobile network of the mobile network provider (in Fig. 2 symbolized by the dashed line)). The latter is advantageously used or useable for registering the calling party and/or the call to the recipient party before initiating the call by the calling party via an API from Naap, which is accessable via the Customer call centre outside the core network of the mobile network.

The prerequisite registering of the calling party, especially a company respectively a call centre of a company, with the network entity CPP of the mobile network of the mobile network provider before initiating a call by the calling party is in Fig. 2 already done. The registering of the calling party with the network entity CPP of the mobile network of the mobile network provider comprises registering and storing at least one phone number (A-number) of the calling party in a list of a database of the network entity CPP of the mobile network of the mobile network provider and further comprises registering and storing a Caller ID of the calling party in a list of a database of the network entity CPP of the mobile network of the mobile network provider, wherein the Caller ID advantageously comprises at least one of a name, a logo, a key, a photo, a video, at least one information item with regard to the reason or content of the call. The registering and storing of the calling party with the network entity CPP of the mobile network of the mobile network provider is done by the calling party via an Application Programming Interface (API) of the mobile network entity (CPP) of the mobile network of the mobile network provider with secure data connections between the API and the CPP.

After registering and storing of the calling party with the network entity CPP of the mobile network of the mobile network provider the calling party can use the anti-spoofing solution according to the present invention for calls. Once the A-number, that is the number of the calling party initiating the call to the recipient party, is stored in the network entity CPP and the TAS servers, the calling party can go through the anti-spoofing process according to the present invention for its calls. The A-number is stored in the TAS servers of the mobile network and can be checked for incoming calls (compare for example Fig. 2: 2. Execute Call).

When using the anti-spoofing feature according to the present invention, each call from the A-number to a B-number of a recipient party must now be pre-registered via another API (pre-call API) of the network entity CPP. If the call is not pre-registered and thus authorized, an actual call from the calling party with the A number to the recipient party with the B-number will not be routed through the mobile network.

The first step (compare for example Fig. 2: 1. Register Call) is to pre-register a subsequent call. The registration of the subsequent call contains parameters such as the "A-number" (number of the calling party), the "B-number" (number of the called recipient party), a timestamp and/or an expected duration of the subsequent call. These parameters are transmitted from the calling party to the network entity CPP, advantageously via a so-called pre-call API, and stored there with a defined validity, for example of e.g. 5 minutes.

In the second step (compare for example Fig. 2: 2. Execute Call) the calling party initiates the call, which is previously registered in the first step (compare for example Fig. 2: 1. Register Call).

The call is the routed through the mobile network and arrives at a TAS Server of the mobile network. The TAS Server comprising a Whitelist with phone numbers (A-numbers) of calling parties registered for using the anti-spoofing solution according to the present invention. When the A-number of the calling party is stored within the Whitelist of the TAS Server there is a match and the TAS Server in the third step (compare for example Fig. 2: 3. Enrich Call) sends a request to the network entity CPP via the core network of the mobile network of the mobile network provider, which in the fourth step (compare for example Fig. 2: 4. Verify Call) checks if the call is correspondingly pre-registered, especially match the parameters of the registered pre-call and the defined time.

If that is the case, the network entity CPP answers in the fifth step (compare for example Fig. 2: 5. Result) on the request of the TAS server in step 3 (compare for example Fig. 2: 3. Enrich Call) with providing the Caller ID of the calling party.

In the sixth step (compare for example Fig. 2: 6. Complete Voice Call), the enriched call is put through via the core network of the mobile network of the mobile network provider to the B-Number of the recipient party, which is a subscriber of the mobile network provider and the Caller ID is displayed on the recipient device.

The embodiments shown in the figures of the drawing and the embodiments explained in connection therewith serve only to explain the presented solutions according to the present invention and are not limiting for the invention.

### Reference signs:

- API: Application Programming Interface
- CPP: network entity/ Call Protect Platform
- LTE: Long Term Evolution
- NaaP: Network as a Platform
- SBC: Session Border Controller
- TAS: Telephony Application Server
- VoLTE: Voice over LTE

## Claims

1. A method to be executed on site of at least one network entity (CPP) of a mobile network of a mobile network provider to prevent Call Spoofing, especially Caller ID spoofing, for calls from a calling party to a device (recipient device) of at least one recipient party which (recipient party) is registered, advantageously is a subscriber of the mobile network provider, for mobile telecommunication services of the mobile network of the mobile network provider, wherein a call from a calling party to a recipient device is only originated respectively routed via the mobile network of the mobile network provider, when the calling party and the call to the recipient party are registered previously with the network entity (CPP) of the mobile network of the mobile network provider before initiating the call by the calling party.

2. The method according to claim 1, wherein the previously registering of the calling party with the network entity (CPP) of the mobile network of the mobile network provider comprises registering and storing at least one phone number (A-number) of the calling party in a list of a database of the network entity (CPP) of the mobile network of the mobile network provider.

3. The method according to claim 2, wherein the previously registering of the calling party with the network entity (CPP) of the mobile network of the mobile network provider further comprises registering and storing a Caller ID of the calling party in a list of a database of the network entity (CPP) of the mobile network of the mobile network provider, wherein the Caller ID advantageously comprises at least one of a name, a logo, a key, a photo, a video, at least one information item with regard to the reason or content of the call.

4. The method according to one of the claims 1 to 3, wherein the previously registering of the call from the calling party to the recipient party with the network entity (CPP) of the mobile network of the mobile network provider comprises registering and storing parameters for the call, comprising at least a phone number (A-number) of the calling party, the phone number (B-number) of at least one recipient party respectively of the device (recipient device) of at least one recipient party and advantageously a timestamp and/or a parameter with regard to a time the call will be valid (NotValidBefore parameter), in a list of a database of the network entity (CPP) of the mobile network of the mobile network provider.

5. The method according to one of the claims 1 to 4, wherein the registering and storing of the calling party with the network entity (CPP) of the mobile network of the mobile network provider and/or the registering and storing of the call to the recipient party with the network entity (CPP) of the mobile network of the mobile network provider is done by the calling party via an Application Programming Interface (API) of the network entity (CPP) of the mobile network of the mobile network provider, advantageously with secure data connections between the Application Programming Interface (API) and the network entity (CPP).

6. The method according to one of the claims 1 to 5, wherein the at least one phone number (A-number) of the calling party is stored in a list (whitelist) of a Telephony Application Server (TAS) of the mobile network of the mobile network provider by the network entity (CPP) of the mobile network of the mobile network provider and can advantageously be checked for incoming calls, advantageously when routing a call.

7. The method according to claim 6, wherein checking for incoming calls is done within the core network of the mobile network of the mobile network provider, advantageously without any additional calls or requests to other services and/or functions outside of the core network of the mobile network of the mobile network provider, advantageously when routing a call.

8. The method according to claim 6 or claim 7, wherein the checking for incoming calls further comprises checking at least one of a timestamp, the parameter with regard to a time the call will be valid (NotValidBefore parameter) and the phone number (B-number) of the recipient party on side of the network entity (CPP) of the mobile network of the mobile network provider, advantageously for further verification of the legitimation of the call.

9. The method according to one of the claims 1 to 8, wherein the parameters for the subsequent call are stored within the network entity (CPP) of the mobile network of the mobile network provider with a defined validity, advantageously within a range of a time window of at least one second and a maximum of 24 hours, preferred within a range of 3 seconds up to 15 minutes.

10. The method according to one of the claims 1 to 9, wherein the calling party initiates a call to the recipient party using the phone number (A-number) of the calling party and the phone number (B-number) of the of at least one recipient party respectively of the device (recipient device) of at least one recipient party.

11. The method according to one of the claims 4 to 10, wherein the calling party is provided with information with regard to a time the call will be valid, based on the parameter with regard to a time the call will be valid (NotValidBefore parameter) by the mobile network entity (CPP) of the mobile network of the mobile network provider.

12. The method according to claim 10 or claim 11, wherein the call from the phone number (A-number) of the calling party is recognized in the mobile network of the mobile network provider by using the list (whitelist) stored in a Telephony Application Server (TAS) of the mobile network of the mobile network provider.

13. The method according to claim 12, wherein the Telephony Application Server (TAS) sends a request to the network entity (CPP) of the mobile network of the mobile network provider to verify the call from the phone number (A-number) of the calling party, wherein the request advantageously comprises if and how the call should be routed.

14. The method of claim 13, wherein the network entity (CPP) of the mobile network of the mobile network provider receives the request and verifies if the calling party respectively the at least one phone number (A-number) of the calling party is stored in the list of the database of the network entity (CPP) of the mobile network of the mobile network provider, and if this is the case verifies whether the call has taken place for the phone number (B-number) of the at least one recipient party within the defined time window, and if that is the case the call is put through to the recipient party respectively recipient device and is otherwise blocked and not put through to the recipient party respectively recipient device.

15. The method according to claim 14, wherein in case the call has taken place for the phone number (B-number) of the at least one recipient party within the defined time window the call is approved by the call authorization service of the mobile network of the mobile network provider and enriched with the Caller ID of the calling party, which is advantageously provided to the Telephony Application Server (TAS) of the mobile network of the mobile network provider by the network entity (CPP) of the mobile network of the mobile network provider.

16. The method according to one of the claims 1 to 15, wherein the call from a calling party to a recipient device is originated respectively routed via the mobile network of the mobile network provider by using Voice over LTE (VoLTE).

17. A network entity (CPP) of a mobile network of a mobile network provider used or useable to prevent Call Spoofing, especially Caller ID spoofing, for calls from a calling party to a device (recipient device) of at least one recipient party which (recipient party) is registered, advantageously is a subscriber of the mobile network provider, for mobile telecommunication services of the mobile network of the mobile network provider, which mobile entity (CPP) is set up, designed and/or adapted to originate respectively route a call from a calling party to a recipient device via the mobile network of the mobile network provider only, when the calling party and the call to the recipient party are registered previously with the mobile network entity (CPP) of the mobile network of the mobile network provider before initiating the call by the calling party.

18. The network entity (CPP) according to claim 17, **characterized in that** the network entity (CPP) is set up, designed and/or adapted to a method according to one of the claims 1 to 16.

19. A mobile network of a mobile network provider comprising a network entity (CPP) according to claim 17 or claim 18 used or useable to prevent Call Spoofing, especially Caller ID spoofing, for calls from a calling party to a device (recipient device) of at least one recipient party according to a method according to one of the claims 1 to 16.

20. The mobile network according to claim 19, wherein the call from a calling party to a recipient device is originated respectively originate-able respectively routed respectively route-able via the mobile network of the mobile network provider by Voice over LTE (VoLTE).
